# EUROPÄISCHE PATENTSCHRIFT

(11) **EP 1 762 740 B1**
(45) Veröffentlichungstag und Bekanntmachung des Hinweises auf die Patenterteilung: **23.04.2014**
(21) Anmeldenummer: 06016884.6
(22) Anmeldetag: 12.08.2006
(51) Int. Cl.: F16D 48/06, B60W 10/02, B60W 10/04

(54) **Verfahren und Vorrichtung zum Steuern des Betriebs einer Kupplung und eines Antriebsmotors im Antriebsstrang eines Fahrzeugs**
Method and device to control the operation of a clutch and an engine in a vehicle transmission
Procédé et appareil pour contrôler l'opération d'un embrayage et d'un moteur dans une transmission d'un véhicule

(30) Priorität: 09.09.2005 DE 102005042973
(43) Veröffentlichungstag der Anmeldung: 14.03.2007
(73) Patentinhaber: Schaeffler Technologies GmbH & Co. KG, 91074 Herzogenaurach (DE)
(72) Erfinder: Stork, Holger, Dr., 77815 Bühl (DE); Küpper, Klaus, Dr., 77815 Bühl (DE); Schneider, Georg, 76137 Karlruhe (DE)

(56) Entgegenhaltungen:
- DE-A1- 10 230 612
- DE-A1- 10 337 624
- DE-A1- 19 957 269

## Beschreibung

Die Erfindung betrifft ein Verfahren und eine Vorrichtung mit den Merkmalen gemäß dem Oberbegriff der Ansprüche 1 oder 11.

Die DE 102 30 612 A1 offenbart ein Verfahren, wonach eine Anfahrkennlinie, zumindest zeitweise, an eine Anfahrsituation angepasst wird.

Die DE 103 37 624 A1 offenbart ein Verfahren, wonach Motormoment sowie Kupplungsmoment nach einem Gangwechsel derart eingestellt werden, dass bei schlupfender Kupplung das Kupplungsmoment erhöht wird und beim Schlupfabbau ein Motoreingriff durchgeführt wird.

Die DE 199 57 269 A1 offenbart ein Verfahren, wonach bei Knallstart eine Antischlupfregelung deaktiviert wird.

In jüngerer Zeit werden zunehmend so genannte "Drive-by-Wire" Systeme eingesetzt, bei denen zwischen einem manuell betätigten Betätigungsglied und einem Stellglied einer zu betätigenden Einheit keine direkte Verbindung besteht. Die manuell betätigte Stellung des Betätigungsgliedes wird von einem Sensor erfasst und zu einem Steuergerät übertragen, das, gegebenenfalls unter Berücksichtigung der Ausgangssignale weiterer Sensoren, eine jeweils einzustellende Stellung des Stellgliedes berechnet und einen Aktor des Stellgliedes entsprechend betätigt. Neben reinen Servofunktionen zur Minderung der für die Betätigung des Betätigungsgliedes erforderlichen Kräfte ergeben sich dadurch Möglichkeiten der Komfort- und Sicherheitsverbesserung.

Der Erfindung liegt die Aufgabe zugrunde, durch den Einsatz einer aktorisch betätigten Kupplung den Betrieb eines Kraftfahrzeugs komfortabler und sicherer zu gestalten.

Diese Aufgabe wird mit einem Verfahren mit den Merkmalen gemäß Anspruch 1 gelöst.

Erfindungsgemäß wird die Laststeuerung des Antriebsmotors in bestimmten Betriebszuständen von der Kupplungssteuerung beeinflusst. Dabei soll der Fahrer von der direkten Entkopplung zwischen Gaspedal und Motorlast sowie Kupplungspedal und Stellung der Kupplung bzw. dem von der Kupplung übertragbaren Moment möglichst wenig merken. Insbesondere soll ein das Motormoment ohne Betätigung des Gaspedals erhöhender Eingriff nur kurzfristig und nur verhältnismäßig gering sein, damit das Fahrzeug nicht unerwünscht oder für den Fahrer überraschend beschleunigt.

Mit Vorteil wird bei stehendem oder annähernd stehendem Fahrzeug das Motormoment an das von der Kupplung übertragbare Kupplungsmoment angepasst.

Weiter kann bei stehendem oder annähernd stehendem Fahrzeug eine Sollleerlaufdrehzahl des Antriebsmotors angehoben werden, wenn das übertragbare Kupplungsmoment von einem Wert von zumindest annähernd Null (voll geöffneter Kupplung) angehoben wird.

Bei einer weiteren vorteilhaften Durchführungsform des erfindungsgemäßen Verfahrens wird insbesondere bei einem Anfahren des Fahrzeugs das Motormoment in der Phase kurzzeitig angehoben, in der sich die Drehzahl einer vom Antriebsmotor angetriebenen Eingangswelle der Kupplung an die Drehzahl einer das Fahrzeug antreibenden Ausgangswelle der Kupplung angleicht.

Dabei ist vorteilhaft, wenn insbesondere bei einem Anfahren des Fahrzeugs in der Phase, in der sich die Drehzahl einer vom Antriebsmotor angetriebenen Eingangswelle der Kupplung an die Drehzahl einer das Fahrzeug antreibenden Ausgangswelle der Kupplung angleicht, das von der Kupplung übertragbare Kupplungsmoment kurzfristig etwas vermindert wird.

Bei einer weiten vorteilhaften Durchführungsform des erfindungsgemäßen Verfahrens wird bei voll geöffneter Kupplung und/oder im Neutralgang befindlichen Getriebe die Drehzahl des Antriebsmotors auf eine vorbestimmte Höchstdrehzahl beschränkt.

Bei Aktivierung eines Fahrzeugstabilitätssteuersystems und offener Kupplung wird die Drehzahl des Antriebsmotors vorteilhaft konstant gehalten. Alternativ kann bei Aktivierung eines Fahrzeugstabilitätssteuersystems und offener Kupplung die Drehzahl des Antriebsmotors vorteilhafterweise auf eine vorbestimmte Höchstdrehzahl begrenzt werden.

Alternativ kann bei Aktivierung eines Fahrzeugsstabilitätssteuersystems und dabei offener Kupplung die Drehzahl des Antriebsmotors derart gesteuert werden, dass der Drehzahl einer Getriebeeingangswelle folgt.

Bei schlupfender Kupplung und zunehmendem übertragbaren Kupplungsmoment ist es vorteilhaft, die Motordrehzahl zu begrenzen.

Weiter ist es möglich, bei schlupfender Kupplung und zunehmendem übertragbaren Kupplungsmoment das Motormoment oder die Motordrehzahl auf einem vorbestimmten Wert zu halten.

Eine Vorrichtung zum Steuern des Betriebs einer Kupplung und eines Antriebsmotors im Antriebsstrang eines Fahrzeugs enthält einen Aktor zum Betätigen der Kupplung, ein Kupplungspedal, einen Sensor zum Erfassen der Stellung des Kupplungspedals, einen Aktor zum Betätigen eines Laststellgliedes des Antriebsmotors, ein Fahrpedal, einen Sensor zum Erfassen der Stellung des Fahrpedals, Sensoren zum Erfassen von Betriebszuständen des Antriebsstrangs und eine elektronische Steuereinrichtung, deren Eingänge mit den Sensoren verbunden sind und deren Ausgänge mit den Aktoren verbunden sind, wobei die elektronische Steuereinrichtung die Aktoren entsprechend einem Verfahren nach einem oder mehreren der vorgenannten Verfahren steuert.

Die Erfindung wird im Folgenden anhand schematischer Zeichnungen beispielsweise und in weiteren Einzelheiten erläutert.

In den Figuren stellen dar:
Fig. 1 ein Schema eines Fahrzeugantriebsstrangs und
Fig. 2 ein Flussbild zur Erläuterung eines erfindungsgemäßen Verfahrens.

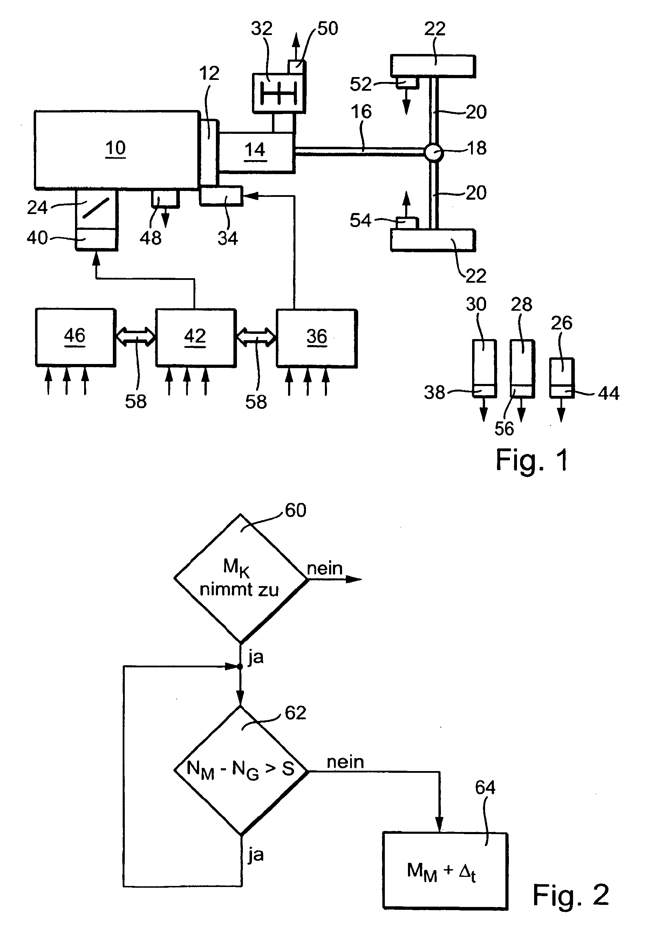

Gemäß Fig. 1 enthält ein Fahrzeugantriebstrang einen Antriebsmotor 10, der über eine Kupplung 12 mit einem Schaltgetriebe 14 verbunden ist, das über eine Kardanwelle 16, ein Differential 18 und Antriebswellen 20 mit angetriebenen Hinterrädern 22 eines Fahrzeugs verbunden ist. Es versteht sich, dass der Antriebsstrang auch als Vorderradantriebsstrang oder Allradantriebsstrang ausgebildet sein könnte.

Die Leistung des Motors 10 wird mittels eines Laststellgliedes 24, beispielsweise einer Drosselklappe, gesteuert.

Für seine Betätigung durch einen Fahrer oder eine Fahrerin weist das Fahrzeug in an sich bekannter Weise unter anderem ein Gaspedal 26, ein Kupplungspedal 28, ein Bremspedal 30 sowie eine Schalthebelbaugruppe 32 auf.

Für die Betätigung der Kupplung 12 ist ein Kupplungsaktor 34 vorgesehen, der von einem Kupplungssteuergerät 36 angesteuert wird, das mindestens einen mit einem Sensor 38 zur Erfassung der Stellung des Kupplungspedals 30 verbundenen Eingang aufweist. Die Kupplungsbetätigung ist somit, wie eingangs erläutert, als "Drive-by-Wire" bzw. "Clutch-by-Wire" System ausgebildet, wobei das Kupplungssteuergerät 36 den Kupplungsaktor 34 abhängig von der Stellung des Kupplungspedals 30 sowie weiterer Betriebsparameter steuert.

Auch die Betätigung des Laststellgliedes 24 erfolgt durch ein Drive-by-Wire System, indem ein Laststellgliedaktor 40 von einem Motorsteuergerät 42 angesteuert ist, das einen Eingang aufweist, der mit einem Sensor 44 zur Erfassung der Stellung des Gaspedals 26 verbunden ist.

Weiter ist ein Steuergerät 46 eines Fahrzeugstabilitätssteuersystems vorgesehen, das mit verschiedenen Sensoren zur Erfassung von Betriebsparametern des Fahrzeugs verbunden ist und beispielsweise Steuersignale zur Steuerung der nicht dargestellten Radbremsen des Fahrzeugs sowie gegebenenfalls zur Öffnung der Kupplung und zur Veränderung des Laststellgliedes 24 erzeugt. Sensoren zum Erfassen der Betriebsparameter sind beispielsweise ein Drehzahlsensor 48 zum Erfassen der Drehzahl des Antriebsmotors 10, ein Gangsensor 50 zur Erfassung der Stellung eines Schalthebels, Raddrehzahlsensoren 52, 54, ein Sensor 56 zur Erfassung der Betätigung des Bremspedals 28 sowie gegebenenfalls weitere Sensoren, wie ein Querbeschleunigungssensor, usw.

Die Steuergeräte 36, 42, 46, können getrennte Einheiten mit einem jeweiligen Prozessor und Speichereinrichtungen sein, die über ein BUS-System 58 kommunizieren. Die Steuergeräte können auch in unterschiedlicher Weise zusammengefasst sein oder durch ein einziges Steuergerät realisiert sein.

Aufbau und Funktion des bisher beschriebenen Antriebsstrangs sind an sich bekannt und werden daher nicht im Einzelnen erläutert.

Im Folgenden wird die Erfindung anhand von Beispielen erläutert, in denen der Betätigungszustand der Kupplung die Motorsteuerung beeinflusst.

### Kriechen/Anfahren mit wenig Gas

Aus Verbrauchsersparnisgründen soll die Leerlaufdrehzahl des Antriebsmotors, vorzugsweise einer Kolbenbrennkraftmaschine, so weit abgesenkt werden, dass der Motor gerade noch rund läuft. Bei solch niedrigen Drehzahlen (beispielsweise 500 min⁻¹) reicht das Drehmoment meist zum Anfahren nicht aus, so dass die Gefahr besteht, den Motor abzuwürgen.

Eine erste Möglichkeit, das zu verhindern, besteht darin, dass das vom Antriebsmotor 10 abgegebene Moment während des Anfahrens an das von der Kupplung übertragbare Moment, das normalerweise durch die Stellung des Kupplungspedals 30 bestimmt ist, angepasst wird. Dies kann bei kleinen erforderlichen Momenten durch einen nicht dargestellten, an sich bekannten Leerlaufregler des Motors erfolgen, der vom Laststellglied 24 getrennt sein kann, oder unmittelbar durch Verstellen des Laststellgliedes 24. Eine zweite Möglichkeit besteht darin, dass, sobald das Kupplungspedal von der voll betätigten Stellung (von der Kupplung übertragbares Moment annähernd Null) in Richtung auf nicht betätigte Stellung bewegt wird, die Leerlaufdrehzahl des Motors beispielsweise von 500 auf 900 min⁻¹ erhöht wird.

### Verschleifen am Ende des Anfahrens

Solange beim Anfahren die Kupplung noch schleift, bleibt üblicherweise die Motordrehzahl etwa konstant, während die Getriebeeingangsdrehzahl entsprechend der zunehmenden Fahrzeuggeschwindigkeit ansteigt. Es ist vorteilhaft, wenn im Moment der Gleichheit zwischen Motordrehzahl und Getriebeeingangsdrehzahl deren zeitliche Ableitungen ebenfalls etwa gleich sind, um einen Momentensprung und damit einhergehende Antriebstriebsstrangschwingungen zu vermeiden.

Bei Antriebsstrangsystemen, bei denen die Kupplungsbetätigung keinen Einfluss auf die Motorsteuerung hat, kann der Verschleifvorgang am Ende des Anfahrens bzw. eines vollständigen Schließens der Kupplung dadurch vorteilhaft erfolgen, dass das Kupplungsmoment etwas vermindert wird, indem der Aktor 34 die Kupplung 12 ohne entsprechende kurzzeitige Betätigung des Kupplungspedals etwas öffnet. Dadurch steigt die Drehzahl des Antriebsmotors etwas an, d.h. die Motorbeschleunigung gleicht sich der Getriebeeingangsbeschleunigung an.

Bei Vorrichtungen mit Motoreingriff kann der Verschleifvorgang dadurch beendet werden, dass an Stelle einer leichten Verminderung des Kupplungsmoments die Motorsteuerung kurzfristig ein etwas erhöhtes Motormoment steuert. Es versteht sich, dass das Verschleifende auch unter Kombination beider Maßnahmen erfolgen kann, d.h. kurzzeitige Verminderung des Kupplungsmoments und kurzzeitige Erhöhung des Motormoments.

### Drehzahl-Abregelung in Neutral oder bei offener Kupplung

Es kann vorkommen, dass der Fahrer bei eingelegtem Neutralgang oder bei voll geöffneter Kupplung das Gaspedal 26 betätigt. Der nicht belastete Motor dreht dann rasch auf sehr hohe Drehzahlen, was aus Abgas-, Lärm- und Verschleißgründen nachteilig ist. Da der elektronischen Steuerung sowohl die Stellung des Wählhebels als auch der Kupplung bekannt ist, kann die Motordrehzahl in einem solchen Fall begrenzt werden, beispielsweise auf 3000 min⁻¹. Der Motoreingriff kann, wie erläutert, durch Vorgabe einer Maximaldrehzahl erfolgen oder auch dadurch, dass ein Drehmoment derart vorgegeben wird, dass die maximale Motordrehzahl nicht überschritten wird.

### Drehzahl-Abregelung bei Eingriff der Fahrdynamik-Regelung

Bekannt ist, die Kupplung 12 zu öffnen, wenn ein im Steuergerät 46 implementiertes Fahrstabilitätsprogramm, beispielsweise eine Antiblockierbremsregelung oder ein Antischleudersystem, aktiviert wird. Beispielsweise kann das Fahrstabilitätssystem auch während einer schnellen Kurvenfahrt ansprechen, so dass die Kupplung öffnet, obwohl der Fahrer noch Gas gibt. Der Motor kann in diesem Fall rasch auf hohe Drehzahl drehen.

Um dies zu vermeiden, kann bei Aktivierung des Fahrstabilitätssystems und offener Kupplung die Motordrehzahl etwa konstant gehalten werden, oder unterhalb einer vorbestimmten Drehzahl gehalten werden, oder aber die Drehzahl des Antriebsmotors kann derart geregelt werden, dass sie der Drehzahl der Getriebeeingangswelle folgt. Weiter ist es möglich, die Motordrehzahl durch Vorgabe eines Motormoments zu regeln.

### Momentenbegrenzung beim Wiedereinkuppeln

Nach einem Gangwechsel wird das Gaspedal normalerweise betätigt und die Kupplung wieder eingerückt. Das Gas- und das Kupplungspedal müssen dazu koordiniert betätigt werden, um einen Momentenstoß und/oder Ruckeln zu vermeiden. Wird zu früh zu viel Gas gegeben, dreht der Motor hoch und beim Wiedereinkuppeln wird unnötig viel Verlustleistung erzeugt.

Dem kann dadurch entgegengewirkt werden, dass bei schlupfender Kupplung und zunehmendem, übertragbaren Kupplungsmoment (zunehmendes Einkuppeln) die Motordrehzahl begrenzt wird oder aber das Motormoment und/oder die Drehzahl auf einem vorbestimmten Wert gehalten wird.

Diese Durchführungsform des Verfahrens wird anhand des Flussdiagramms gemäß Figur 2 beispielsweise erläutert:

Im Schritt 60 stellt die elektronische Steuereinrichtung fest, dass das übertragbare Kupplungsmoment M_{K} zunimmt, wobei der Schritt 60 nur angesteuert wird, wenn das Fahrzeug anfährt, beispielsweise zusätzlich die Fahrzeuggeschwindigkeit zunimmt. Wird das Kriterium des Schritts 60 erfüllt, so schreitet das Verfahren zum Schritt 62 fort, in dem festgestellt wird, ob die Drehzahl der Motorwelle N_{M} um einen vorbestimmten Betrag S über der Drehzahl der Getriebeeingangswelle N_{G} liegt. Ist dies der Fall, so wird der Schritt 62 entsprechend dem Takt der Vorrichtung wiederholt. Unterscheiden sich die beiden genannten Drehzahlen um weniger als den Schwellwert S, so schreitet das Verfahren zum Schritt 64 fort, in dem das augenblickliche Motormoment M_{M} kurzzeitig um einen Betrag Δₜ erhöht wird, wobei die Drehmomenterhöhung und deren zeitlicher Verlauf von weiteren Betriebsparametern abhängen kann.

Die geschilderten erfindungsgemäßen Verfahren können in vielfältiger Weise geändert werden. Beispielsweise können die Motoreingriffe, so weit sie nicht von aktorbedingten Kupplungseingriffen abhängig sind, auch bei nicht von einem Aktor 34 betätigten Kupplungen 12 erfolgen, sofern die Stellung des Kupplungspedals 30 von einem Sensor 38 erfasst wird und somit jeder Stellung des Kupplungspedals ein vorbestimmtes übertragbares Kupplungsmoment zugeordnet ist.

### Bezugszeichenliste

- 10: Antriebsmotor
- 12: Kupplung
- 14: Schaltgetriebe
- 16: Kardanwelle
- 18: Differential
- 20: Antriebswelle
- 22: Hinterrad
- 24: Laststellglied
- 26: Gaspedal
- 28: Bremspedal
- 30: Kupplungspedal
- 32: Schalthebelbaugruppe
- 34: Kupplungsaktor
- 36: Kupplungssteuergerät
- 38: Sensor
- 40: Laststellgliedaktor
- 42: Motorsteuergerät
- 44: Sensor
- 46: Steuergerät
- 48: Drehzahlsensor
- 50: Gangsensor
- 52: Raddrehzahlsensor
- 54: Raddrehzahlsensor
- 56: Sensor
- 58: BUS-System

## Patentansprüche

1. Verfahren zum Steuern des Betriebs einer Kupplung (12) und eines Antriebsmotors (10) im Antriebsstrang eines Fahrzeugs, wobei in vorbestimmten Betriebszuständen das vom Antriebsmotor erzeugte Motormoment und/oder dessen Drehzahl durch einen vom von der Kupplung übertragbaren Kupplungsmoment abhängigen Eingriff in ein Laststeuersystem (42, 40) des Antriebsmotors (10) beeinflusst wird, wobei das von der Kupplung übertragbare Kupplungsmoment durch die Stellung eines Kupplungspedals (30) bestimmt ist, und wobei die Stellung eines Gaspedals (26) erfasst wird, **dadurch gekennzeichnet, dass** bei stehendem oder annähernd stehenden Fahrzeug eine Sollleerlaufdrehzahl des Antriebsmotors (10) angehoben wird, wenn das übertragbare Kupplungsmoment von einem Wert von zumindest annähernd Null angehoben wird.

2. Verfahren nach Anspruch 1, **dadurch gekennzeichnet, dass**, bei stehendem oder annähernd stehendem Fahrzeug das Motormoment an das von der Kupplung (12) übertragbare Kupplungsmoment angepasst wird.

3. Verfahren nach einem der Ansprüche 1 oder 2, **dadurch gekennzeichnet, dass** bei einem Anfahren des Fahrzeugs das Motormoment in der Phase kurzzeitig angehoben wird, in der sich die Drehzahl einer vom Antriebsmotor (10) angetriebenen Eingangswelle der Kupplung (12) an die Drehzahl einer das Fahrzeug antreibenden Ausgangswelle der Kupplung angleicht.

4. Verfahren nach Anspruch 3, **dadurch gekennzeichnet, dass** bei einem Anfahren des Fahrzeugs in der Phase, in der sich die Drehzahl einer vom Antriebsmotor (10) angetriebenen Eingangswelle der Kupplung (12) an die Drehzahl einer das Fahrzeug antreibenden Ausgangswelle der Kupplung angleicht, das von der Kupplung übertragbare Kupplungsmoment kurzzeitig etwas vermindert wird.

5. Verfahren nach einem der Ansprüche 1 bis 4, **dadurch gekennzeichnet, dass**, bei voll geöffneter Kupplung und/oder im Neutralgang befindlichen Getriebe (14) die Drehzahl des Antriebsmotors (10) auf eine vorbestimmte Höchstdrehzahl beschränkt wird.

6. Verfahren nach einem der Ansprüche 1 bis 5, **dadurch gekennzeichnet, dass**, bei Aktivierung eines Fahrstabilitätssteuersystems (46) und offener Kupplung (12) die Drehzahl des Antriebsmotors (10) konstant gehalten wird.

7. Verfahren nach einem der Ansprüche 1 bis 5, **dadurch gekennzeichnet, dass**, bei Aktivierung eines Fahrstabilitätssteuersystems (46) und offener Kupplung (12) die Drehzahl des Antriebsmotors (10) auf eine vorbestimmte Drehzahl begrenzt wird.

8. Verfahren nach einem der Ansprüche 1 bis 5, **dadurch gekennzeichnet, dass**, bei Aktivierung eines Fahrstabilitätssteuersystems (46) und offener Kupplung (12) die Drehzahl des Antriebsmotors (10) derart gesteuert wird, dass sie der Drehzahl einer Getriebeeingangswelle folgt.

9. Verfahren nach einem der Ansprüche 1 bis 8, **dadurch gekennzeichnet, dass**, bei schlupfender Kupplung (12) und zunehmendem übertragbaren Kupplungsmoment die Motordrehzahl begrenzt wird.

10. Verfahren nach einem der Ansprüche 1 bis 8, **dadurch gekennzeichnet, dass**, bei schlupfender Kupplung (12) und zunehmendem übertragbaren Kupplungsmoment das Motormoment oder die Motordrehzahl auf einem vorbestimmten Wert gehalten wird.

11. Vorrichtung zum Steuern des Betriebs einer Kupplung und eines Antriebsmotors im Antriebsstrang eines Fahrzeugs, welche Vorrichtung
einen Aktor (34) zum Betätigen der Kupplung (12),
ein Kupplungspedal (30),
einen Sensor (38) zum Erfassen der Stellung des Kupplungspedals,
einen Aktor (40) zum Betätigen eines Laststellgliedes (24) des Antriebsmotors (10), ein Gaspedal (26),
einen Sensor (44) zum Erfassen der Stellung des Fahrpedals,
Sensoren (48, 50, 52, 54) zum Erfassen von Betriebszuständen des Antriebsstrangs, und
eine elektronische Steuereinrichtung (36, 42, 46) enthält, deren Eingänge mit den Sensoren verbunden sind und deren Ausgänge mit den Aktoren verbunden sind, **dadurch gekennzeichnet, dass**, die elektronische Steuereinrichtung die Aktoren entsprechend einem Verfahren nach einem oder mehreren der Ansprüche 1 bis 10 steuert.

## Claims

1. Method for controlling the operation of a clutch (12) and of a drive engine (10) in the drive train of a vehicle, wherein in specific operating states the engine torque which is generated by the drive engine and/or the rotational speed thereof are/is influenced by an intervention, dependent on the clutch torque which can be transmitted by the clutch, into a load control system (42, 40) of the drive engine (10), wherein the clutch torque which can be transmitted by the clutch is determined by the position of a clutch pedal (30), and wherein the position of an accelerator pedal (26) is detected, **characterized in that** when the vehicle is stationary or approximately stationary a setpoint idling speed of the drive engine (10) is increased if the clutch torque which can be transmitted is increased from a value of at least approximately zero.

2. Method according to Claim 1, **characterized in that** when the vehicle is stationary or approximately stationary the engine torque is adapted to the clutch torque which can be transmitted by the clutch (12).

3. Method according to one of Claims 1 or 2, **characterized in that** when the vehicle starts the engine torque is briefly increased in the phase in which the rotational speed of an input shaft, driven by the drive engine (10), of the clutch (12) approximates to the rotational speed of an output shaft, driving the vehicle, of the clutch.

4. Method according to Claim 3, **characterized in that** when the vehicle starts the clutch torque which can be transmitted by the clutch is briefly reduced somewhat in the phase in which the rotational speed of an input shaft, driven by the drive engine (10), of the clutch (12) approximates to the rotational speed of an output shaft, driving the vehicle, of the clutch.

5. Method according to one of Claims 1 to 4, **characterized in that** when the clutch is fully opened and/or when the transmission (14) is in neutral the rotational speed of the drive engine (10) is limited to a predetermined maximum rotational speed.

6. Method according to one of Claims 1 to 5, **characterized in that** when a driving stability control system (46) is activated and the clutch (12) is open the rotational speed of the drive engine (10) is kept constant.

7. Method according to one of Claims 1 to 5, **characterized in that** when a driving stability control system (46) is activated and the clutch (12) is open the rotational speed of the drive engine (10) is limited to a predetermined rotational speed.

8. Method according to one of Claims 1 to 5, **characterized in that** when a driving stability control system (46) is activated and the clutch (12) is open the rotational speed of the drive engine (10) is controlled in such a way that it follows the rotational speed of a transmission input shaft.

9. Method according to one of Claims 1 to 8, **characterized in that** when the clutch (12) is slipping and the clutch torque which can be transmitted is increasing the engine rotational speed is limited.

10. Method according to one of Claims 1 to 8, **characterized in that** when the clutch (12) is slipping and the clutch torque which can be transmitted is increasing the engine torque or the engine rotational speed is kept at a predetermined value.

11. Device for controlling the operation of a clutch and of a drive engine in the drive train of a vehicle, which device contains
an actuator (34) for activating the clutch (12),
a clutch pedal (30),
a sensor (38) for detecting the position of the clutch pedal,
an actuator (40) for activating a load actuator element (24) of the drive engine (10),
an accelerator pedal (26),
a sensor (44) for detecting the position of the accelerator pedal,
sensors (48, 50, 52, 54) for detecting operating states of the drive train,
and
an electronic control device (36, 42, 46) whose inputs are connected to the sensors and whose outputs are connected to the actuators, **characterized in that** the electronic control device controls the actuators according to a method according to one or more of Claims 1 to 10.

## Revendications

1. Procédé pour contrôler l'opération d'un embrayage (12) et d'un moteur d'entraînement (10) dans la transmission d'un véhicule, le couple moteur produit par le moteur d'entraînement et/ou sa vitesse de rotation étant influencés dans des états opérationnels prédéfinis par une intervention dans un système de commande de charge (42, 40) du moteur d'entraînement (10) en fonction du couple d'embrayage pouvant être transmis par l'embrayage, le couple d'embrayage pouvant être transmis par l'embrayage étant déterminé par la position d'une pédale d'embrayage (30) et la position d'une pédale d'accélération (26) étant en outre détectée, **caractérisé en ce qu'**en présence d'un véhicule à l'arrêt ou quasiment à l'arrêt, une vitesse de rotation au point mort théorique du moteur d'entraînement (10) est majorée lorsque le couple d'embrayage transmissible est majoré à partir d'une valeur au moins approximativement nulle.

2. Procédé selon la revendication 1, **caractérisé en ce qu'**en présence d'un véhicule à l'arrêt ou quasiment à l'arrêt, le couple moteur est adapté au couple d'embrayage pouvant être transmis par l'embrayage (12).

3. Procédé selon l'une quelconque des revendications 1 ou 2, **caractérisé en ce que** lorsque le véhicule avance, le couple moteur est majoré pendant un temps court dans la phase dans laquelle la vitesse de rotation d'un arbre d'entrée de l'embrayage (12) entraîné par le moteur d'entraînement (10) égale la vitesse de rotation d'un arbre de sortie de l'embrayage entraînant le véhicule.

4. Procédé selon la revendication 3, **caractérisé en ce que** lorsque le véhicule avance dans la phase dans laquelle la vitesse de rotation d'un arbre d'entrée de l'embrayage (12) entraîné par le moteur d'entraînement (10) égale la vitesse de rotation d'un arbre de sortie de l'embrayage entraînant le véhicule, le couple d'embrayage pouvant être transmis par l'embrayage est diminué quelque peu sur un temps court.

5. Procédé selon l'une quelconque des revendications 1 à 4, **caractérisé en ce que** lorsque l'embrayage est entièrement ouvert et/ou dans une boîte de vitesses (14) se trouvant dans un rapport neutre, la vitesse de rotation du moteur d'entraînement (10) est majorée de façon délimitée d'une vitesse de rotation maximale prédéterminée.

6. Procédé selon l'une quelconque des revendications 1 à 5, **caractérisé en ce qu'**en cas d'activation d'un système de commande de stabilisation de la conduite (46) et d'embrayage ouvert (12), la vitesse de rotation du moteur d'entraînement (10) est maintenue constante.

7. Procédé selon l'une quelconque des revendications 1 à 5, **caractérisé en ce qu'**en cas d'activation d'un système de commande de stabilisation de la conduite (46) et d'embrayage ouvert (12), la vitesse de rotation du moteur d'entraînement (10) est limitée à une vitesse de rotation prédéterminée.

8. Procédé selon l'une quelconque des revendications 1 à 5, **caractérisé en ce qu'**en cas d'activation d'un système de commande de stabilisation de la conduite (46) et d'embrayage ouvert (12), la vitesse de rotation du moteur d'entraînement (10) est commandée de telle sorte qu'elle suit la vitesse de rotation d'un arbre d'entrée de la boîte de vitesses.

9. Procédé selon l'une quelconque des revendications 1 à 8, **caractérisé en ce qu'**en cas de patinage de l'embrayage (12) et d'augmentation du couple d'embrayage transmissible, la vitesse de rotation du moteur est limitée.

10. Procédé selon l'une quelconque des revendications 1 à 8, **caractérisé en ce qu'**en cas de patinage de l'embrayage (12) et d'augmentation du couple d'embrayage transmissible, le couple moteur ou la vitesse de rotation du moteur est maintenu à une valeur prédéterminée.

11. Appareil pour contrôler l'opération d'un embrayage et d'un moteur d'entraînement dans la transmission d'un véhicule, ledit appareil contenant :
un actionneur (34) servant à actionner l'embrayage (12) ;
une pédale d'embrayage (30) ;
un capteur (38) de détection de la position de la pédale d'embrayage ;
un actionneur (40) servant à actionner un élément de réglage de charge (24) du moteur d'entraînement (10) ;
une pédale d'accélérateur (26) ;
un capteur (44) de détection de la position de la pédale d'accélérateur ;
des capteurs (48, 50, 52, 54) de détection d'états opérationnels de la transmission ; et
un appareil de commande électronique (36, 42, 46) dont les entrées sont reliées aux capteurs et dont les sorties sont reliées aux actionneurs ;
**caractérisé en ce que** l'appareil de commande électronique commande les actionneurs suivant un procédé selon l'une quelconque des revendications 1 à 10 ou plusieurs d'entre elles.
